# EUROPÄISCHE PATENTSCHRIFT

(11) **EP 1 892 675 B1**
(45) Veröffentlichungstag und Bekanntmachung des Hinweises auf die Patenterteilung: **17.11.2010**
(21) Anmeldenummer: 06016586.7
(22) Anmeldetag: 08.08.2006
(51) Int. Cl.: G07C 9/02, G06K 7/08

(54) **Zugangskontrollsystem**
Access control system
Système de contrôle d'accès

(43) Veröffentlichungstag der Anmeldung: 27.02.2008
(73) Patentinhaber: SkiData AG, 5083 Gartenau (AT)
(72) Erfinder: Ponert, Gregor, A-5020 Salzburg (AT); Golser, Rudolf Dr., A-5400 Hallein (AT)
(74) Vertreter: Karakatsanis, Georgios

(56) Entgegenhaltungen:
- WO-A-01/03237
- WO-A-01/22529
- DE-B3-102004 013 965
- US-A- 5 321 412
- DOMINIQUE PARET: "RFID and Contactless Smart Card Applications" JOHN WILEY & SONS, LTD., 2005, XP007901519 ISBN: 0-470-01195-5
- KLAUS FINKENZELLER: "RFID-Handbuch: Grundlagen und praktische Anwendungen induktiver Funkanlagen, Transponder und kontaktloser Chipkarten" 2002, CARL HANSER VERLAG MÜNCHEN WIEN , GERMANY ISBN: 3-446-22071-2 * page 234 - page 236 * * page 368 - page 369 *

## Beschreibung

Die Erfindung bezieht sich auf ein Zugangskontrollsystem nach dem Oberbegriff des Anspruchs 1.

Derartige Zugangskontrollsysteme werden beispielweise bei Skiliften verwendet. Dabei ist jede Zugangsspur mit einem Drehkreuz oder dergleichen Sperrelement abgesperrt, das durch einen gültigen Transponder freigeschaltet wird. Um den Transponder in jeder Trageposition des Skifahrers sicher auslesen zu können, wird jede Zugangsspur mit zwei Leseeinrichtungen mit gegenüberliegenden Antennen überwacht. Um eine magnetische Verkopplung der beiden Antennenspulen zu vermeiden, werden die beiden Leseeinrichtungen im Multiplex-Betrieb abwechselnd aktiviert (vgl. RFID-Handbuch, Carl Hanser Verlag, Wien-München, 2. Auflage, 1999, Seite 333). Abgesehen von den Kosten für zwei Leseeinrichtungen, hat der Multiplex-Betrieb eine Verlängerung der Transaktionszeit zur Folge. Da die Feldstärke der jeweiligen Antennenspule mit zunehmendem Abstand exponentiell abnimmt, lässt zudem die Lesezuverlässigkeit der bekannten Vorrichtung zur Mitte der Zugangsspur hin zu wünschen übrig, insbesondere dann, wenn der Transponder z.B. durch den Körper des Skifahrers abgedeckt wird.

Aus DE 10 2004 013 965 B3 ist eine Zugangskontrollvorrichtung bekannt, bei der das Sperrelement in seiner Grundstellung den Zugang freigibt und ihn nur bei ungültiger Lesung einer Zugangsberechtigung und gleichzeitiger Detektion einer Person mit einem Personensensor blockiert. Damit das Sperrelement seine Blockierstellung einnehmen kann, bevor die detektierte Person ohne gültige Zugangsberechtigung das Sperrelement erreicht, ist eine erste Antennenspule mit größerem Abstand vor dem Sperrelement vorgesehen, und zusätzlich eine zweite Antennenspule mit geringerem Abstand, um zu verhindern, dass eine Person ohne gültige Zugangsberechtigung vor dem Sperrelement wartet, bis der Zugang durch eine zweite nachfolgende Person mit gültiger Zugangsberechtigung freigegeben wird. Die hintereinander angeordneten Antennenspulen sind paarweise auf beiden Seiten der Zugangsspur angeordnet, um die gesamte Breite der Zugangsspur zu erfassen. Die Lesezuverlässigkeit der bekannten Vorrichtung lässt jedoch noch zu wünschen übrig.

Aus US-A-5321412 ist ein Warensicherungssystem zur Detektion magnetostriktiver Etiketten mit zwei Antennenanordnungen bekannt, die jeweils aus einer Empfangsantenne und einer inneren sowie einer äußeren Sendeantenne bestehen. Das Etikett wird in einem ersten, gegenphasigen Betriebsmodus erfasst, wenn es längs orientiert ist, und in einem zweiten, gleichphasigen Betriebsmodus, wenn es quer orientiert ist.

In der Literaturstelle "RFID and Contactless Smart Card Applications" von D. Paret, ISBN 978-0-470-01195-9, 2005, Seiten 256 bis 259 und 262 bis 264 wird eine gegenphasige Ansteuerung der beiden Antennenspulen eines Zugangskontrollsystems, bei der die Feldlinien die Transponderspule senkrecht durchsetzen, und eine gleichphasige Ansteuerung der beiden Antennenspulen, bei der die Feldlinien parallel zu der Transponderspule-Längsachse verlaufen, besprochen. Aus dieser Literaturstelle ist auch ein Drehfeldverfahren bekannt, das eine Identifikation des Transponders ermöglicht ungeachtet der momentanen Position und der Ausrichtung der Transponderspule.

Aufgabe der Erfindung ist es, ein einfach aufgebautes Zugangskontrollsystem bereitzustellen, mit dem ein Transponder in kurzer Transaktionszeit zuverlässig ausgelesen werden kann.

Dies wird erfindungsgemäß mit dem im Anspruch 1 gekennzeichneten Zugangskontrollsystem erreicht. In den Unteransprüchen sind vorteilhafte Ausgestaltungen der Erfindung wiedergegeben.

Nach der Erfindung sind zum Auslesen des Transponders mit der Zugangsberechtigung wenigstens zwei Antennenspulen an gegenüberliegenden Seiten, also links und rechts der Zugangsspur vorgesehen, beziehungsweise, falls mehrere Zugangsspuren beispielsweise zu einem Skilift vorgesehen sind, an jeder Zugangsspur. Die beiden Antennenspulen werden von einer Leseeinrichtung gleichzeitig, also synchron angesteuert.

Jede Antennenspule erzeugt ein hochfrequentes Feld, welches das Innere der Transponderspule durchsetzt. Die Frequenz kann z.B. 135 kHz oder weniger oder 13,56 MHz betragen. Durch Induktion wird an der Transponderspule eine Spannung erzeugt, auf der einerseits die Energieversorgung des Datenträgers (Mikrochip) des Transponders und zugleich die Datenübertragung zwischen Leseeinrichtung und Transponder beruht.

Wenn die beiden Antennenspulen der Leseeinrichtung gleichphasig angesteuert werden, führt die Superposition der Einzelfelder der Antennenspulen an beiden Seiten der Zugangsspur zu Feldlinien, die sich quer über die Zugangsspur erstrecken. D.h., wenn die Spulenfläche der Transponderspule längs der Zugangsspur, also parallel zu den Antennenspulen der Leseeinrichtung angeordnet ist, wird die Transponderspule von der maximalen Anzahl von Feldlinien durchsetzt, so dass die Energieaufnahme des Transponders und damit die Lesezuverlässigkeit ihr Maximum erreicht.

Hingegen weist bei diesem Feldlinienverlauf die Energieaufnahme und damit die Lesezuverlässigkeit ihr Minimum auf, wenn die Spulenfläche der Transponderspule quer zur Zugangsrichtung, also senkrecht zu den Antennenspulen der Leseeinrichtung angeordnet ist, da dann die Transponderspule nicht, jedenfalls nur von wenigen Feldlinien durchsetzt wird.

Im Gegensatz zum gleichphasigen Betriebsmodus führt die Superposition der Einzelfelder der beiden Antennenspulen bei gegenphasigem Betriebsmodus zu Feldlinien, die insbesondere in der Mitte der Zugangsspur zwischen den beiden Antennenspulen längs der Zugangsspur verlaufen. D.h., wenn die Spulenfläche der Transponderspule quer zur Zugangsrichtung, also senkrecht zu den Antennenspulen angeordnet ist, wird die Transponderspule von der maximalen Anzahl von Feldlinien durchsetzt, wodurch die maximale Lesezuverlässigkeit erreicht wird.

Erfindungsgemäß werden daher die beiden Antennenspulen jedes Paares von der Leseeinrichtung zwar gleichzeitig, jedoch abwechselnd entweder gleichphasig oder gegenphasig angesteuert.

Der Betriebsmodus, bei dem ein Transponder in der Zugangsspur detektiert wird, also erstmals antwortet, wird dann so lange aufrechterhalten, bis die Lesetransaktion abgeschlossen ist. D.h., wenn beispielsweise ein Transponder so getragen wird, dass die Spulenfläche der Transponderspule längs der Zugangsspur angeordnet ist, wird er im gleichphasigen Betriebsmodus der beiden Antennenspulen detektiert und damit ausgelesen werden, während beispielsweise ein mit der Spulenfläche der Transponderspule quer zur Zugangsspur getragener Transponder im gegenphasigen Betriebsmodus der Antennenspulen detektiert und ausgelesen werden wird.

Um die Transaktionszeit zu verkürzen, ist es vorteilhaft, einen Online-Zugriff zu der Zugangsberechtigung und gegebenenfalls weiteren Anwendungsdaten vorzusehen. Dazu können die Zugangsberechtigungs- und gegebenenfalls weiteren Anwendungsdaten in einer Datenbank abgelegt sein, mit der die Leseeinrichtung verbunden ist, und zwar zusammen mit einer eindeutigen Referenz, beispielsweise der Chip-Seriennummer des Transponders, so dass aus dem Transponder mit den Antennenspulen der Leseeinrichtung nur die Referenz ausgelesen zu werden braucht.

Die Erfindung kann bei Zugangskontrollvorrichtungen eingesetzt werden, bei denen die bzw. jede Zugangsspur mit einem Drehkreuz oder dergleichen Sperrelement abgesperrt ist, das nach Auslesen eines Transponders mit gültiger Zugangsberechtigung durch die Leseeinrichtung freigeschaltet wird. Das Sperrsystem kann z.B. eine Ampel aufweisen, die beim Sperren auf Rot und bei Freigabe auf Grün geschaltet wird, oder ein Drehkreuz oder dergleichen Sperrelement. Das erfindungsgemäße Zugangskontrollsystem weist ensprechend DE 10 2004 013 965 B3 eine "Open Gate"-Grundstellung auf, in der der Zugang freigegeben ist, wobei das Sperrmittel den Zugang nur bei ungültiger Lesung einer Zugangsberechtigung und Detektion einer Person mit einem Personensensor blockiert. Dabei sind in Zugangsrichtung ein erstes und ein zweites Antennenspulenpaar hintereinander angeordnet, wobei das Sperrelement in Abhängigkeit einer gültigen oder ungültigen Lesung einer Zugangsberechtigung mit dem ersten Antennenspulenpaar und/oder dem zweiten Antennenspulenpaar betätigbar ist.

Dabei kann für jedes Antennenspulenpaar eine Leseeinrichtung vorgesehen sein, oder nur eine Leseeinrichtung, die die beiden Antennenspulenpaare abwechselnd ansteuert.

Wenn zwei oder mehr Zugangssperren vorgesehen sind, werden die Zugangssperren vorzugsweise parallel und asynchron betrieben. Ein Multiplexer zwischen den Sperren ist damit nicht mehr notwendig, was eine beträchtliche Zeitersparnis bedeutet.

Das erfindungsgemäße Kontrollsystem kann beispielsweise für Transporteinrichtungen angewendet werden, insbesondere in Skigebieten. Selbstverständlich ist es auch für andere Verwendungszwecke geeignet, beispielweise für Gebäude, Stadien, Schwimmbäder und dergleichen.

Nachstehend ist die Erfindung anhand der beigefügten Zeichnung beispielhaft näher erläutert. Darin zeigen:
- Figur 1: eine perspektivische Ansicht einer Zugangsspur mit einer Zugangskontrollvorrichtung für den "Open Gate"-Betrieb, wobei die eine Antennenspule des der Drehsperre benachbarten Antennespulenpaares weggelassen ist;
- Figur 2: eine schematische Draufsicht auf die Zugangsspur nach Figur 1, wobei die Drehsperre weggelassen ist;
- Figur 3 und 4: zwei geschnitten dargestellte, gegenüberliegende Antennenspulen der Vorrichtung nach Figur 1 und 2 mit dem Feldlinienverlauf bei gleichphasigem bzw. gegenphasigem Betriebsmodus;
- Figur 5: eine Draufsicht auf eine Transponderspule; und
- Figur 6: eine Ausführungsform einer Schaltungsanordnung für das erfindungsgemäße Zugangskontrollsystem.

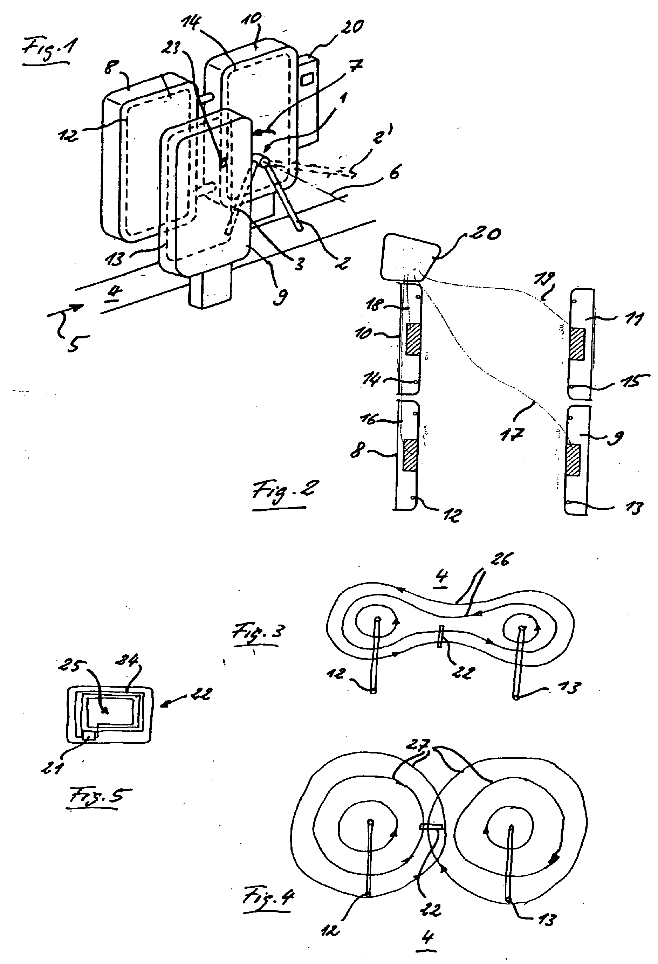

Gemäß Figur 1 weist die Zugangskontrollvorrichtung einen Drehstern mit zwei Sperrarmen 2, 3 als Sperrelement 1 zum Sperren der Zugangsspur 4 auf, die in Richtung des Pfeils 5 passiert wird. Das Sperrelement 1 ist um eine gegenüber der Waagerechten geneigte Achse 6 drehbar. Beide Sperrarme 2, 3 schließen mit der Drehachse 6 einen Winkel von ca. 45 ° und miteinander einen Winkel von ca. 120 ° ein. In Figur 1 sind die Sperrarme 2, 3 in der "Open Gate"-Grundstellung dargestellt, in der sie den Zugang 4 freigeben. Durch Drehung des Sperrelements 1 entsprechend dem Pfeil 7 wird der Sperrarm 2 nach oben in die in Figur 1 gestrichelt dargestellte Position 2' geschwenkt und damit der Zugang 5 blockiert. Statt der zwei Sperrarme 2, 3 kann auch nur ein einziger Sperrarm vorgesehen sein, der mit der Drehachse 6 einen Winkel von ca. 45° einschließt und in die Sperrposition 2' drehbar ist. Dieser Sperrarm kann wahlweise stets in Durchgangsrichtung drehbar sein (Sperren - Freigeben) oder in beide Richtungen bewegt werden.

Gemäß Figur 1 und 2 ist in einem Gehäuse 8, 9, 10, 11 jeweils eine Antennenspule 12, 13, 14 bzw. 15 angeordnet. Die Antennenspule 12 und 13, die auf gegenüberliegenden Seiten der Zugangsspur 4 angeordnet sind, bilden ein erstes Antennenspulenpaar, und die Antennenspulen 14 und 15 ein zweites Antennenspulenpaar. Die Antennenspulen 12 bis 15 sind über ein HF-Kabel 16, 17, 18, 19 an eine gemeinsame Leseeinrichtung 20 angeschlossen (Figur 2). Jedoch kann auch für jedes Antennenspulenpaar 12 und 13 bzw. 14 und 15 jeweils eine eigene Leseeinrichtung vorgesehen sein.

Die Leseeinrichtung 20 steuert das Sperrelement 1 an. Mit dem in Zugangsrichtung 5 ersten Antennenspulenpaar 12, 13 wird die Zugangsberechtigung ausgelesen, die in einem Mikrochip 21 des Transponders 22 abgelegt ist (Figur 5), der von dem Benutzer getragen wird, der den Zugang 4 passiert.

Wenn mit dem ersten Antennenspulenpaar 12, 13 eine gültige Zugangsberechtigung ausgelesen wird, bleibt das Sperrelement 1 in der Freigabeposition, d.h. die Sperrarme 2 und 3 weisen neben der Zugangsspur 4 nach unten. Passiert hingegen eine Person ohne gültige Lesung einer Zugangsberechtigung das erste Antennenspulenpaar 12, 13 und zugleich einen Personensensor 23, z.B. eine Lichtschranke, wird der Sperrarm 2 in die in Figur 1 gestrichelt dargestellte Blockierstellung 2' verschwenkt. Damit der Benutzer, der dann vor dem Sperrarm 2' steht, das Sperrelement 1 nicht passieren kann, wenn ein zweiter Benutzer mit gültiger Zugangsberechtigung nachkommt, wird nach Detektion einer Person mit dem Personensensor 23 und ohne gültige Lesung das erste Antennenspulenpaar 12, 13 deaktiviert und das zweite Antennenspulenpaar 14, 15 aktiv geschaltet.

Die Zugangsberechtigung einer nachfolgenden Person wird damit nicht erfasst. Stattdessen erfolgt eine nochmalige Prüfung der Zugangsberechtigung der vor dem Sperrarm 2' stehenden Person mit dem Antennenspulenpaar 14, 15. Bei einer gültigen Zugangsberechtigung bei nochmaliger Überprüfung mit dem Antennenspulenpaar 14, 15 wird das Antennenspulenpaar 12, 13 wieder aktiv und das Antennenspulenpaar 14, 15 inaktiv geschaltet und das Sperrelement 1 wieder in die Freigabeposition gedreht.

Gemäß Figur 5 besteht der RFID-Transponder 22 im Wesentlichen aus der Antennen- oder Transponderspule 24 mit dem Mikrochip 21 als Datenträger.

Durch die Leseeinrichtung 20 erzeugen die aktiv geschalteten Antennenspulenpaare 12 und 13 bzw. 14 und 15 ein hochfrequentes Feld. Dabei ist die induktive Kopplung zwischen dem jeweiligen Antennenspulenpaar 12 und 13 bzw. 14 und 15 mit dem Transponder 22 umso stärker, je mehr Feldlinien das Innere 25 der Transponderspule 24 durchsetzen.

Wie in Figur 3 für das aktiv geschaltete Antennenspulenpaar 12 und 13 dargestellt, führt eine gleichphasige Ansteuerung der beiden Antennenspulen 12, 13 durch die Leseeinrichtung 20 zu einer Superposition der Einzelfelder der Antennenspulen 12, 13 an beiden Seiten der Zugangsspur 4 zu Feldlinien 26, die sich größtenteils quer über die Zugangsspur 4 erstrecken.

D.h., wenn der Transponder 22 und damit die die Spulenfläche der Transponderspule 24 längs der Zugangsspur 5, also, wie in Figur 3 dargestellt, parallel zu den Antennenspulen 12, 13 angeordnet ist, wird das Innere 25 des Transponders 24 von der maximalen Anzahl von Feldlinien 26 durchdrungen, so dass die Energieaufnahme des Transponders 22 und damit die Lesezuverlässigkeit ihr Maximum erreicht.

Hingegen weist beim Feldlinienverlauf 26 gemäß Figur 3 die Energieaufnahme und damit die Lesezuverlässigkeit ihr Minimum auf, wenn die Spulenfläche der Transponderspule 24 quer zur Zugangsrichtung, also senkrecht zu den Antennenspulen 12, 13 angeordnet wäre, da dann keine, jedenfalls nur wenige Feldlinien 26 die Transponderspule 24 durchsetzen.

Im Gegensatz zum gleichphasigen Betriebsmodus führt die Superposition der Einzelfelder der beiden Antennenspulen 12, 13 bei gegenphasigem Betriebsmodus gemäß Figur 4 zu Feldlinien 27, die insbesondere in der Mitte der Zugangsspur 4 zwischen den beiden Antennenspulen 12 und 13 mehr längs der Zugangsspur 4 verlaufen. D.h., wenn die Spulenfläche der Transponderspule 24 quer zur Zugangsrichtung 5, also senkrecht zu den Antennenspulen 12, 13 angeordnet ist, wird das Innere 25 der Transponderspule 24 von der maximalen Anzahl von Feldlinien 27 durchsetzt, wodurch die Lesezuverlässigkeit ihr Maximum erreicht.

Erfindungsgemäß werden daher die beiden Antennenspulen 12, 13 zwar gleichzeitig, jedoch abwechselnd entweder gleichphasig oder gegenphasig von der Leseeinrichtung 20 angesteuert.

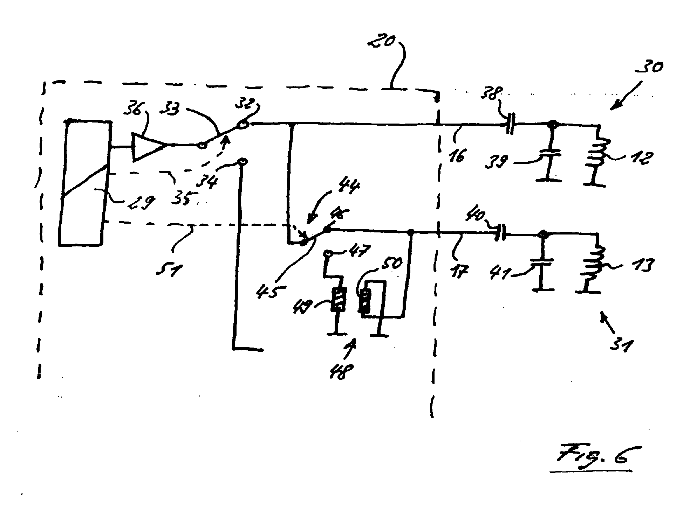

In der in Figur 6 dargestellten Schaltungsanordnung sind lediglich die beiden Parallelschwingkreise 30, 31 für die beiden in Figur 1 und 2 ersten Antennenspulen 12 und 13 dargestellt, die an den einen Pol 32 des Diodenschalters 33 angeschlossen sind, an dessen anderen Pol 34 die nicht dargestellten Parallelschaltkreise mit den beiden gemäß Figur 1 und 2 zweiten Antennenspulen 14 und 15 angeschlossen sind. Die Schaltung der an den Pol 34 des Schalters 33 angeschlossenen Schwingkreise der beiden Antennenspulen 14 und 15 sind dabei in gleicher Weise ausgebildet wie die in Figur 6 dargestellten an den Pol 32 des Schalters 33 angeschlossenen beiden Parallelschwingkreise 30, 31. Der Diodenschalter 33 wird von der Sende/Empfangselektronik 29 der Leseeinrichtung über die gestrichelt dargestellte Steuerleitung 35 angesteuert.

Gemäß Figur 6 ist zwischen der Sende- und Empfangselektronik 29 der Leseeinrichtung 20 und dem Schalter 33 ein Treiber 36 vorgesehen. Der Pol 32 des Schalters 33 ist über einen Kondensator 38 mit dem einen Parallelschwingkreis 30 aus der Antennenspule 12 und dem parallel geschalteten Kondensator 39 verbunden. Demgegenüber ist der Kondensator 40 des zweiten Parallelschwingkreises 31, der aus der Antennenspule 13 und dem Kondensator 41 besteht, mit dem Pol 32 des Schalters 33 über einen 180 °-Phasenschalter 44 verbindbar.

Der Phasenschalter 44 besteht seinerseits aus einem Diodenschalter 45, dessen einer Pol 46 direkt mit dem Parallelschwingkreis 30 verbunden ist, während der andere Pol 47 über einen Trafo 48 mit zwei Spulen 49, 50 zur 180 °-Phasenumkehr zu dem Parallelschwingkreis 31 führt. Durch Umschalten des Diodenschalters 45 kann damit der gleichphasige Betriebsmodus der beiden Schwingkreise 30, 31 in den gegenphasigen Betriebsmodus übergeführt werden.

Der Diodenschalter 45 wird im Betrieb der Zugangskontrollvorrichtung von der Sende/Empfangselektronik 29 über die gestrichelt dargestellte Steuerleitung 51 angesteuert und dadurch zwischen den Polen 46, 47 ständig hin- und hergeschaltet. Wenn die Sende/Empfangselektronik 29 einen Transponder 22 detektiert, wird der Betriebsmodus, bei dem der Transponder 22 detektiert worden ist, solange aufrechterhalten, bis die Lesetransaktion abgeschlossen, also der Datenaustausch zwischen Sende/Empfangselektronik 29 und Transponder 22 abgewickelt worden ist.

D.h., wenn der Transponder 22 gemäß Figur 3 z.B. in einer Seitentasche getragen und die Spulenfläche der Transponderspule 24 damit in Zugangsrichtung 5, also parallel zu den Antennenspulen 12, 13 ausgerichtet ist, und der Transponder 22 daher im gleichphasigen Betriebsmodus detektiert wird, also wenn der Diodenschalter 45 auf den Pol 46 geschaltet ist, bleibt dieser Betriebsmodus aufrechterhalten, bis die Lesetransaktion abgeschlossen ist, während, wenn der Transponder 22 mit der Spulenfläche der Transponderspule 24 gemäß Figur 4 z.B. in einer Brusttasche getragen und der Transponder 22 daher im gegenphasigen Betriebsmodus, also bei auf den Pol 47 geschaltetem Diodenschalter 45 detektiert wird, der gegenphasige Betriebsmodus beim Datenaustausch aufrechterhalten wird. Nach dem Ende der Transaktion wird über die Steuerleitung 51 das Hin- und Herschalten des Diodenschalters 45 fortgesetzt.

## Patentansprüche

1. Zugangskontrollsystem mit wenigstens einer Zugangsspur (4) mit zwei in Zugangsrichtung (5) hintereinander angeordneten Antennenspulenpaaren (12, 13 und 14, 15) mit paarweise gegenüberliegenden Antennenspulen (12 bis 15), wobei jedes Antennenspulenpaar (12, 13 und 14, 15) von einer Leseeinrichtung (20) zum Auslesen eines vom Benutzer getragenen Transponders (22) angesteuert wird, welcher eine mit den Antennenspulen (12 bis 15) koppelbare Transponderspule (24) aufweist, sowie mit einem Sperrsystem (1), das in seiner Grundstellung den Zugang frei gibt und ihn nur bei ungültiger Lesung einer Zugangsberechtigung mit der Leseeinrichtung (20) und Detektion einer Person mit einem Personensensor (23) blockiert und das in Abhängigkeit der gültigen oder ungültigen Lesung einer Zugangsberechtigung mit dem ersten Antennenspulenpaar (12, 13) und/oder dem zweiten Antennenspulenpaar (14, 15) betätigbar ist, **dadurch gekennzeichnet, dass** die beiden gegenüberliegenden Antennenspulen (12, 13 bzw. 14, 15) eines Paares gleichzeitig, jedoch abwechselnd entweder in einem gleichphasigen oder in einem gegenphasigen Betriebsmodus angesteuert werden und zum Auslesen des von dem Benutzer getragenen Transponders (22) derjenige Betriebsmodus, bei dem der Transponder (22) detektiert wird, solange aufrechterhalten wird, bis die Lesetransaktion abgeschlossen ist, dass jede Antennenspule (12 bis 15) mit einem hochfrequenten Feld durch Induktion an der Transponderspule (24) eine Spannung zur Energieversorgung des Datenträgers des Transponders (22) und zur Datenübertragung zwischen der Leseeinrichtung (20) und dem Transponder (22) erzeugt, und dass bei gleichphasigem Betriebsmodus der beiden Antennenspulen (12, 13 bzw. 14, 15) eines Paares und Anordnung der Spulenfläche der Transponderspule (24) längs der Zugangsspur (4) die Energieaufnahme des Transponders (22) ihr Maximum erreicht, während bei gegenphasigem Betriebsmodus und Anordnung der Spulenfläche der Transponderspule (24) quer zur Zugangsrichtung (5) die Transponderspule (24) von der maximalen Anzahl von Feldlinien durchsetzt wird.

2. Zugangskontrollsystem nach Anspruch 1, **dadurch gekennzeichnet, dass** zum Umschalten zwischen dem gleichphasigen und dem gegenphasigen Betriebsmodus und zum Aufrechterhalten des jeweiligen Betriebsmodus beim Detektieren des Transponders (22) je eine Antennenspule (12 bis 15) jedes Antennenspulenpaares mit einem 180 °-Phasenschalter (44) angesteuert wird, der von der Sende/Empfangselektronik (29) der Leseeinrichtung (20) angesteuert wird.

3. Zugangskontrollsystem nach Anspruch 2, durch **gekennzeichnet**, dass der 180 °-Phasenschalter (44) einen Diodenschalter (45) aufweist.

4. Zugangskontrollsystem nach Anspruch 3, **dadurch gekennzeichnet, dass** der Diodenschalter (45) die eine Antennenspule (12 bis 15) zur 180 °-Phasenumkehr über einen Trafo (48) ansteuert.

5. Zugangskontrollsystem nach Anspruch 1, **dadurch gekennzeichnet, dass** die Leseeinrichtung (20) von dem Transponder (22) Identifikationsdaten ausliest und eine Datenbank zum Online-Zugriff der Zugangsberechtigungsdaten vorgesehen ist.

6. Zugangskontrollsystem nach Anspruch 1, **dadurch gekennzeichnet, dass** das Sperrsystem durch ein Sperrelement (1) gebildet wird.

7. Zugangskontrolleinrichtung mit einem Zugangskontrollsystem nach einem der vorstehenden Ansprüche, **dadurch gekennzeichnet, dass** wenigstens zwei Zugangssperren vorgesehen sind und diese Zugangssperren parallel und asynchron zueinander betrieben werden.

## Claims

1. An access control system comprising at least one access lane (4) equipped with antenna coils (12, 13 and 14, 15) juxtaposed in pairs and lined up in the access direction (5), said pairs of antenna coils (12, 13 and 14, 15) being controlled by reading means (20) adapted to read a user-carried transponder (20) and having a transponder coil (24) for coupling with antenna coils (12 to 15), and a blocking system (1) which in its basic condition deblocks the accessway and blocks it only in case a person detector (23) detects a person and reading means (20) detect an invalid access privilege, said blocking system configured to be actuated in dependence on the valid or invalid reading of an access privilege by means of said first pair of antenna coils (12, 13) and/or second pair of antenna coils (14, 15), **characterized in that** the juxtaposed antenna coils (12, 13 or 14, 15, respectively) of a pair being excited simultaneously but alternatingly in an in-phase or an oppositely phased operating mode, **in that** the transponder (22) carried by a user being read by using the operating mode resulting in the detection of transponder (22) being upheld until the read transaction is terminated, **in that** antenna coils (12 to 15) each generate an RF field to induce in transponder coil (24) a voltage to supply power to data storage means in transponder (22) and for the transmission of data between reading means (20) and transponder (22), and **in that** in the in-phase mode of operation of the antenna coils (12, 13 or 14, 15) of a pair of antenna coils, and with the major surface of transponder coil (24) being diposed along access lane (4), the energy intake of transponder (22) is maximum whereas in the oppositely phased mode of operation, and with the major surface of transponder coil (24) transverse to access direction (5), transponder coil (24) has a maximum of lines of field passing therethrough.

2. Access control system as in claim 1, **characterized in that**, for alternating between the in-phase and the oppositely phased modes of operation, and for maintaining the mode of operation active as transponder (22) is being detected, one antenna coil (12 to 15) of each pair of antenna coils is excited by means of a 180° phase switch (44) controlled by transmit/ receive electronics (29) in reading means (20).

3. Access control system as in claim 2, **characterized in that** said 180° phase switch (44) comprises diode switching means (45).

4. Access control system as in claim 3, **characterized by** diode switching means (45) exciting said one of antenna coils (12 to 15) for 180° phase inversion through a transformer (48).

5. Access control system as in claim 1, **characterized in that** reading means (20) is configured to read identification data from transponder (22), with a data base being provided for on-line access to access privilege data.

6. Access control smystem as in claim 1, **characterized in that** said blocking system comprises a lane barring element (1).

7. Access control apparatus using an access control system as in any one of the preceding claims, **characterized by** at least two access blocking means, said means being operated in parallel and asynchronously to each other.

## Revendications

1. Système de contrôle des accès avec au moins une voie d'accès (4) avec deux paires d'enroulement d'antenne (12, 13 et 14, 15) disposées l'une derrière l'autre dans le sens de l'accès (5) avec des enroulements d'antenne (12 à 15) se faisant face par paires, chaque paire d'enroulements d'antenne (12, 13 et 14, 15) étant commandé par un dispositif de lecture (20) pour la lecture d'un transpondeur (22) porté par l'utilisateur, qui présente un enroulement de transpondeur (24) pouvant être couplé aux enroulements d'antenne (12 à 15), et avec un système de barrage (1) qui dégage l'accès dans sa position de base et ne le bloque qu'en cas de lecture incorrecte d'une autorisation d'accès avec le dispositif de lecture (20) et de détection d'une personne par un capteur de personnes (23) et qui peut être actionné en fonction de la lecture correcte ou incorrecte d'une autorisation d'accès avec la première paire d'enroulements d'antenne (12, 13) et/ou la deuxième paire d'enroulements d'antenne (14, 15), **caractérisé en ce que** les deux enroulements d'antenne (12, 13 et 14, 15) se faisant face d'une paire sont activés simultanément mais alternativement dans un mode de fonctionnement soit en phase, soit en phase opposée, et en vue de la lecture du transpondeur (22) porté par l'utilisateur, le mode de fonctionnement dans lequel le transpondeur (22) est détecté est maintenu jusqu'à ce que la transaction de lecture soit terminée, **en ce que** chaque enroulement d'antenne (12 à 15) génère avec un champ à haute fréquence, par induction sur l'enroulement de transpondeur (24), une tension pour l'alimentation en énergie du support de données du transpondeur (22) et pour la transmission de données entre le dispositif de lecture (20) et le transpondeur, et **en ce que** l'énergie absorbée par le transpondeur (22) atteint son maximum quand les enroulements d'antenne (12, 13 et 14, 15) d'une paire fonctionnent dans le mode en phase et quand la surface d'enroulement de l'enroulement de transpondeur (24) le long de la voie d'accès (4), tandis que dans le mode de fonctionnement en phase opposée et si la surface d'enroulement de l'enroulement de transpondeur (24) est disposée perpendiculairement au sens d'accès (5), l'enroulement de transpondeur (24) est traversé par le nombre maximal de lignes de champ.

2. Système de contrôle des accès selon la revendication 1, **caractérisé en ce que** pour la commutation entre le mode de fonctionnement en phase et en phase opposée et en vue de maintenir le mode de fonctionnement lors de la détection du transpondeur (22), un enroulement d'antenne (12 à 15) de chaque paire d'enroulements d'antenne est activée par un commutateur de phase à 180° (44) qui est activé par l'électronique d'émission et de réception (29) du dispositif de lecture (20).

3. Système de contrôle des accès selon la revendication 2, **caractérisé en ce que** le commutateur de phase à 180° (44) présente un commutateur à diodes (45).

4. Système de contrôle des accès selon la revendication 3, **caractérisé en ce que** le commutateur à diodes (45) active l'un des enroulements d'antenne (12 à 15) pour l'inversion de phase à 180° par l'intermédiaire d'un transformateur (48).

5. Système de contrôle des accès selon la revendication 1, **caractérisé en ce que** le dispositif de lecture (20) lit des données d'identification sur le transpondeur (22) et il est prévu une base de données pour l'accès en ligne aux données d'autorisation d'accès.

6. Système de contrôle des accès selon la revendication 1, **caractérisé en ce que** le système de barrage est formé par un élément de barrage (1).

7. Dispositif de contrôle des accès avec un système de contrôle des accès selon l'une des revendications précédentes, **caractérisé en ce qu'**au moins deux barrages d'accès sont prévus et ces barrages d'accès sont pilotés en parallèle et de façon asynchrone l'un par rapport à l'autre.
